# EUROPEAN PATENT SPECIFICATION

(11) **EP 1 856 203 B1**
(45) Date of publication and mention of the grant of the patent: **11.11.2015**
(21) Application number: 06716141.4
(22) Date of filing: 28.02.2006
(51) Int. Cl.: C08L 53/00

(54) **THERMOPLASTIC POLYETHERESTER ELASTOMER COMPOSITION HAVING EXCELLENT FLEX ELASTICITY AND COVER FOR AIR-BAG DEVICE THEREBY**
THERMOPLASTISCHE POLYETHERESTERELASTOMERZUSAMMENSETZUNG MIT HERVORRAGENDER BIEGEELASTIZITÄT UND ABDECKUNG FÜR EINE AIRBAGVORRICHTUNG DADURCH
COMPOSITION ELASTOMERE DE POLYETHERESTER THERMOPLASTIQUE POSSEDANT UNE REMARQUABLE ELASTICITE EN FLEXION ET CAPOT POUR DISPOSITIF DE COUSSIN GONFLAGE

(30) Priority: 09.03.2005 KR 20050019418
(43) Date of publication of application: 21.11.2007
(73) Proprietor: Kolon Plastics, Inc., Gyeongsangbuk-do (KR)
(72) Inventor: PARK, Sung-keun, Daegu 701-014 (KR); PARK, Eun-ha, Gyeongsangbuk-do 730-020 (KR); LEE, Do-keun, Gyeongsangbuk-do 730-080 (KR)
(74) Representative: Ter Meer Steinmeister & Partner
(86) International application number: PCT/KR2006/000691
(87) International publication number: WO 2006/095970

(56) References cited:
- JP-A- 56 036 543
- JP-A- 59 004 417
- JP-A- 2004 217 898
- KR-A- 20020 074 645
- KR-A- 20030 079 001
- KR-A- 20040 050 036
- KR-B1- 970 010 473
- US-A- 6 132 424

## Description

### TECHNICAL FIELD

The present invention relates to a thermoplastic polyetherester elastomer resin composition having excellent flex-elasticity (Flexural modulus) and durability, and a cover for air bag device thereby, and more particularly, to a thermoplastic polyetherester elastomer resin composition which is suitably employed in production of a variety of materials such as interior materials of various machine parts, pushbutton type parts as well as covers for air-bag devices of automobiles and, in addition to, a cover for an air-bag of automobile made of the same.

Conventionally, polyester elastomer means thermoplastic elastomer materials including ester chain structures which represent flexibility and elasticity recovering properties substantially equal to those of typical vulcanized rubbers, and have intermediate properties between rubbers and plastics sufficient to produce formed articles by molding processes generally applied to thermoplastic materials such as polyethylene, polypropylene, polyamide, polyester and so on, without vulcanization to produce the vulcanized rubber.

It is commonly known that the vulcanized rubber is formed by vulcanization process of rubber materials with low viscosity which exist in nature or are prepared by artificial synthesis. Such rubber materials have disadvantages in that they are thermosetting materials that are difficult to recycle or reutilize, require highly complicated formation processes and have poor stability, although they have very superior flexibility and elasticity recovering properties. Therefore, an improved material to overcome the disadvantages mentioned above is required and, as a result of constant research and investigation to achieve the purpose, thermoplastic elastomer (TPE) was developed. The first thermoplastic elastomer was styrene based elastomer and, followed by a variety of thermoplastic elastomer materials such as urethane, olefin or amide based elastomers.

Among them, the polyester based thermoplastic elastomer which was a material developed in recent three decades, unlike others, is usually known to have favorable performance and stability compared with the other thermoplastic elastomer materials. However, in a variety of recent applications, there is still a need for an increase in level of long-term usability such as durability and weather-proof properties, etc. required for the thermoplastic elastomer materials and also for better mechanical properties substantially equal to those of engineering plastics.

The thermoplastic polyester elastomer is useful for, for example, a cover for an air-bag device. An air-bag system primarily comprises an impact detection sensor to detect collision of a high speed driving vehicle and the air-bag device. The air-bag device typically comprises an air bag placed in an empty region formed in a steering wheel or an instrument panel at front face of a driver's seat or a passenger seat in the high speed vehicle, a gas generator connected to the air bag for swelling the same, a retaining device for keeping the air bag, the gas generator and a cover in the empty region, the cover for protecting an opening of the empty region in which the air bag, the gas generator and the retaining device are placed, and a horn unit located below the cover. The air bag cover system is generally classified into a membrane type cover system and a floating type cover system in view of operating the horn unit. In particular, the membrane type cover system in which a horn is positioned below a thin and soft air bag cover is designed to operate the horn by pressing down surface of the air bag cover. On the other hand, the floating type cover system equipped with the horn below a cover module is designed to press down an entire part of the cover in order to operate the horn. Accordingly, the floating type cover system needs higher flexibility than that of the membrane type cover system in order to transfer pressure applied from hands of a driver uniformly over the horn. Further, the shape of the cover is not particularly restricted but may have differences in feeling when the cover is touched by passengers and in inflating the air bag upon collision of a vehicle, dependent upon materials used.

It is well known that the air bag system works in principle as follows: impact at collision of a vehicle is detected by the impact detection sensor and ignition material contained in the gas generator is electrically or mechanically ignited and an expansion agent of the gas generator is heated to generate gases; the gases are fed into an empty space between the retaining device and the cover, and charged in the air bag to swell the air bag, which is originally flat and folded; and the cover is cracked at a desired position by pressure of the swollen air bag, splits and forms an opening through which the air bag is instantly released and expands toward the front of the driver of the passenger. The expanded air bag functions as a shock absorber to protect the passenger against injuries caused by the collision with the steering wheel or the instrument panel of the vehicle. Accordingly, the air bag cover is essentially required in the air bag system and there is still a need for an improved air bag system, in which the cover reliably splits without generating broken pieces to inflict injuries on the driver or the passenger, and releases and expands the air bag instantly if the air bag system is operated by generation of the gas on impact.

### BACKGROUND ART

As techniques to block debris in deploying an air bag cover, Japanese Patent Laid-Open Nos. S50-127336 and S55-110643 disclose air bag cover constructions comprising reinforced nets made of nylon. However, a cover with such proposed construction has drawbacks in that it demands additional time for enclosing the reinforced net with the cover and the net is liable to be released out of a predetermined position, thereby lowering productivity, although it can preferably prevent undesirable cracks from generating on sites of the cover except for predetermined positions and the cracked pieces from scattering in all directions.

Japanese Patent Laid-Open No. H1-202550 discloses a cover for air bag device that comprises a surface layer composed of soft material having a hardness of 30 to 70 according to JIS K 6301 type A and a core layer composed of rigid resin having elasticity and slits for splitting the cover. The proposed cover exhibits a constant level of adhesiveness and offers proper flexibility to the driver or the passenger. However, the cover needs a specific double injection machine for molding double layers to obtain the core layer and the surface layer, which has two separate injection mechanisms. Further, the cover obtained by the double layer molding has a disadvantage in that surface of the cover needs to be coated due to poor scratch-resistance of the surface layer containing the soft material, leading to rising production costs.

Japanese Patent Laid-Open No. H6-200086 discloses a thermoplastic elastomer composition comprising hydrogenated block copolymer, polyolefin resin, paraffin oil and rubber. The hydrogenated block copolymer contained in the composition includes polymer blocks having high number average molecular weight and tends to exhibit poor processability. In order to avoid such poor processability, it is needed to increase amount of the paraffin oil and the rubber. But, if the amount of the paraffin oil and the rubber is increased, the cover may have insufficient scratch-resistance.

As an example of conventional arts to overcome the problems of polyolefin based thermoplastic elastomer as described above, it has been proposed that polyurethane based thermoplastic elastomer is used for the cover of the air bag device. In particular, US Patent No. 5,316,822 suggests that a process for manufacturing the cover of the air bag device comprises using polyurethane elastomer. However, this process is similar to that taught by Japanese Patent Laid-Open No. H1-202550, which requires the double layer formation. US Patent No. 4,895,389 discloses that a process for manufacturing the air bag cover with superior performance comprises using polyesterether elastomer. However, this document mainly describes a structural design of the cover and does not include particular contents related to raw materials for the cover and characteristics thereof. In addition, US Patent No. 6,027,818 states in appended claims that polyesterether elastomer containing epoxy compounds is significantly used for the cover of the air bag device. But, the document lacks investigation and/or discussion about characteristics of the cover in the detailed description. Also, as constitutional composition of the proposed polyesterether elastomer used in the cover, it is understood that the composition belongs to the range widely known and applied in general uses of polyesterether elastomer and is insufficient to be employed in production of covers for air bag devices of automobiles in view of durability.

As an example of techniques for improving durability of polyesterether elastomer, US Patent No. 3,723,427 discloses a tris(hydroxybenzyl)cyanurate stabilizer which is at present commonly known as a hindered phenolic primary stabilizer. Alternatively, US Patent No. 3,758,579 discloses a thioesteric secondary stabilizer and a combination of the secondary stabilizer and the phenolic primary stabilizer. Likewise, other techniques similar to that of the above document are employed in a wide variety of applications, for example, as described in US Patent Nos. 3,996,675 and 4,414,408 which intend to derive synergistic effect of the phenolic primary stabilizer and the thioesteric secondary stabilizer by combining both of them together. Among these, US Patent No. 4,069,200 states the use of a hindered phenolic primary stabilizer such as 6-tert-butyl-2,3-dimethyl-4-(dimethylaminomethyl)-phenol, 6-tert-octyl-2,3-dimethyl-4-(dimethylaminomethyl)-phenol, 6-tert-butyl-4-(dimethylaminomethyl)-5,6,7,8-tetrahydro-1-naphthol, 5-tert-butyl-2,3-dimethyl-4-hydroxybenzylphosphonate, etc. alone, or use of a thioesteric secondary stabilizer such as dilaurylthiodipropionate or distearylthiodipropionate and the above primary stabilizer in combination to improve durability of polyolefin resin. US Patent No. 4,185,003 discloses a combination of a phenolic antioxidant such as N,N'-hexamethylenebis(3,5-di-t-butyl-4-hydroxyhydrocinnamamide), N,N'-trimethylenebis(3,5-di-t-butyl-4-hydroxyhydrocinnamamide), etc. and a hindered amine type of photostabilizer such as bis(1,2,2,6,6-pentamethyl-4-piperidinyl)-n-butyl-(3,5-di-t-butyl-4-hydroxybenzyl)malonate), bis(2,2,6,6-tetramethyl-4-piperidinyl)bis(3,5-di-t-butyl-4-hydroxybenzyl)malonate, to improve stability of copolyetherester. US Patent No. 4,405,749 describes use of 1,3,5-tris-(2-hydroxyethyl)-s-triazine-2,4,6-(1H,3H,5H)trione and triester compounds of 3,5-di-t-butyl-4-hydroxyhydrocinnamic acid to improve stability of polyester resin. There are further publications, for example: Japanese Patent Gazette No. S63-38371 suggesting a production method of stabilizers with a large content of dimers from 2,2,4-trimethyl-1,2-dihydroquinoline; Japanese Patent Gazette No. S63-40817 proposing use of a combination of a 2,2,4-trimethyl-1,2-dihydroquinoline compound as stated above and a phenothiazine type compound; and Japanese Patent Gazette No. S63-40819 involving use of a combination of the 2,2,4-trimethyl-1,2-dihydroquinoline compound as stated above and a mercapto compound such as 2-mercaptobenzoimidazol or 2-mercaptomethylbenzoimidazol, etc. to improve quality of the rubber.

However, in case of the polyetherester thermoplastic elastomer which has different properties from polyethylene terephthalate or polybutylene terephthalate resins, polyol fraction of the elastomer as soft segment is quickly decomposed by heat to generate formic acid and displays the decomposition of the elastomer accelerated by the generated formic acid. In order to prevent the decomposition from being accelerated, the formic acid generated must be captured. Such capturing process is typically carried out by materials containing constituent molecules with basicity. But, amine type stabilizers among the materials have a problem of deteriorating original color of a product in spite of excellent heat-resistance.

Meanwhile, Korean Patent Laid-Open No. 2004-0050036 discloses that a production method of a resin composition for air bag cover with superior deploying property is achieved by combining high hardness thermoplastic elastomer and low hardness thermoplastic elastomer. But, the produced resin composition is insufficient to offer higher flexible elasticity (that is, flex-elasticity) suitable for a floating type air bag cover module. The flex-elasticity means flexural modulus.

In addition, WO 03/05199 A1 describes a resin composition for air bag cover comprising low hardness polyester thermoplastic elastomer and high hardness polyester resin which has improved deploying properties at low temperature. However, the resin composition has a defect of unstable formation of strands due to phase-separation of a fused mixture of the above two materials.

JP 56036543 A discloses a moldable composition comprising a polyetherester block copolymer (A) composed of a hard segment consisting of a polyester essentially composed of terephthalic acid and 1,4-butanediol and of a soft segment consisting of terephthalic acid and a polyoxyalkylene glycol of number-average MW of 300- 6,000, a thermoplastic polyester (B) having higher melting point than that of component (A) and an ionic copolymer (C) containing a mono- to trivalent metal ion.

KR 2004 0050036 discloses a thermoplastic polyetherester elastomer resin composition containing a polyetherester block copolymer as main component and additionally a nucleating agent and a stabilizer as additives, wherein the polyetherester block copolymer comprises a low hardness polyetherester block copolymer having a shore hardness of 40-50D and a high hardness polyetherester block copolymer having a shore hardness of 50-63D.

As described above, although polyester thermoplastic elastomer which was developed in relatively recent years is well known to exhibit excellent performance and stability compared with other thermoplastic elastomers, there is still a strong need for a novel thermoplastic elastomer having good mechanical properties as well as softness and elasticity inherent to the thermoplastic elastomer, which can be employed in a wide variety of applications.

### DISCLOSURE OF THE INVENTION

### (TECHNICAL PROBLEM)

As a result of intensive and extensive research and investigation in order to improve mechanical properties, especially, flex-elasticity of a resin composition by combining different kinds of resin compositions together, the present inventors found out that a thermoplastic elastomer resin composition as claimed in claim 1 with desired properties including flexibility, flex-elasticity and, additionally, low temperature properties, weather-proofing properties, good mechanical strength, processability and the like while sufficiently improving durability of a raw material made of the composition is obtainable by combining together different polyetherester block copolymers with low hardness and high hardness, respectively, adding polybutylene terephthalate as an enhancer of mechanical properties and a polyolefin copolymer resin having epoxy groups to the mixture and, optionally, further adding other stabilizers to the mixture to improve deploying properties of the resulting composition if the composition is used in a cover for air bag device of automobile; and the present invention was completed.

Accordingly, an object of the present invention is to provide a polyetherester thermoplastic elastomer resin composition having mechanical properties, especially, flex-elasticity while maintaining flexibility, and inhibiting reduction of mechanical properties caused by ageing of the resin which often occurs if the resin lacks in durability.

The inventors found that: it enables production of a formed article such as a cover for air bag device, which exhibits excellent deploying properties as well as inherent features of thermoplastic elastomer resin compositions, when the cover is manufactured by the inventive elastomer resin composition described above; and, therefore, accomplished the present invention on the basis of this finding.

Accordingly, another object of the present invention is to provide a cover for air bag device of automobile manufactured by molding processes using the inventive elastomer resin composition, which has excellent deploying properties and considerably reduces failures of operating horn units that often occur if the cover lacks certain mechanical properties, especially, flex-elasticity.

### (TECHNICAL MEANS TO SOLVE THE PROBLEM)

In order to solve the conventional problems and achieve the above objects, the present invention provides a polyetherester elastomer resin composition as claimed in claim 1 having excellent flex-elasticity and durability, and a cover for air bag device of automobile made by the same.

More particularly, the polyetherester elastomer resin composition of the present invention having excellent flex-elasticity and durability comprises low hardness polyetherester block copolymer, high hardness polyetherester block copolymer, polybutylene terephthalate and polyolefin copolymer resin having epoxy groups and stabilizers.

The polyetherester elastomer resin composition of the present invention can be employed in a wide range of applications requiring flexibility and good mechanical properties simultaneously, for example, which include covers for air bags of automobiles, interior materials of a variety of mechanical parts, push-buttons of machines exposed to high temperature for long periods of time.

The present invention will be more particularly described below.

The inventive polyetherester elastomer resin composition having excellent flex-elasticity and durability comprises 10 to 70% by weight of low hardness polyetherester block copolymer having shore-hardness in the range of 40 to 45D (measured according to ASTM D2240), 15 to 55% by weight of high hardness polyetherester block copolymer having shore-hardness in the range of 50 to 80D (measured according to ASTM D2240) and 15 to 35% by weight of polybutylene terephthalate, and wherein the composition is further added with polyolefin copolymer resin having epoxy groups represented by the following formula 3: 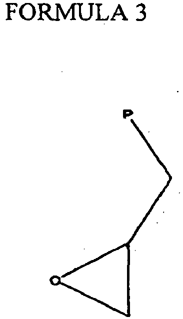 (wherein P is a polymer obtained from C₂ to C₁₂ olefins).

The polyetherester elastomer resin composition of the present invention comprises thermoplastic polyetherester block copolymer, as a major ingredient, with a specific structure in that hard segments represented by the following formula 1 and soft segments represented by the following formula 2 are aligned alternately: 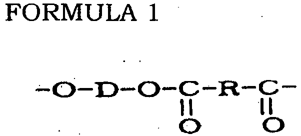 (wherein D is a radical obtained after removing two hydroxy groups from any compound selected from a group consisting of C₂ to C₈ saturated aliphatic diols and cyclic diols alone or in combination; and R is a radical obtained after removing two carboxyl groups from any compound selected from a group consisting of aromatic, aliphatic and cyclic dicarboxylic acids having molecular weight of 500 or less). 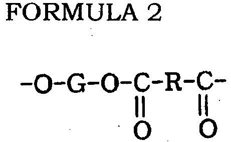 (wherein G is a radical obtained after removing two hydroxy groups from any compound selected from a group consisting of polyetherglycols having molecular weight in the range of 400 to 4,000 alone or in combination; and R has the same meaning as defined in the above illustrated formula 1).

The present invention uses low hardness polyetherester block copolymer and high hardness polyetherester block copolymer among the thermoplastic block copolymers by combining both of the block copolymers with polybutylene terephthalate.

Hardness of the polyetherester block copolymer means surface hardness which is determined according to ASTM D-2240 and represented as shore hardness D unit. The low hardness polyetherester block copolymer has the shore hardness in the range of 40 to 45D. The high hardness polyetherester block copolymer has the shore hardness in the range of 50 to 80D.

The polyetherester block copolymer comprises 10 to 70% by weight of the low hardness polyetherester block copolymer and 15 to 55% by weight of the high hardness polyetherester block copolymer based on total weight of the polyetherester thermoplastic elastomer resin composition.

When amount of the low hardness polyetherester block copolymer is less than 10% by weight, the cover for air bag device of automobile feels very rigid when touched. Otherwise, a raw material of the cover becomes too soft to have a desired pushing property if the amount exceeds 70% by weight.

On the other hand, when amount of the high hardness polyetherester block copolymer is less than 15% by weight, strands in resin molten in the production of the inventive resin composition may be not stably formed. On the contrary, if the amount exceeds 55% by weight, the cover for air bag device of automobile feels very rigid to touch and a problem, of departing an entire portion of the cover from the air bag device instead of deploying the air bag device along a break line for deploying when the air bag device is deployed, may occur.

As another major ingredient, polybutylene terephthalate (PBT) is a polymer represented by the above formula 1, provided that D is a radical obtained after removing two hydroxy groups from C₄ saturated aliphatic diols and R is a radical obtained after removing two carboxyl groups from benzene ring.

PBT is used as a mechanical property enhancer to increase flex-elasticity of the polyetherester elastomer resin composition according to the present invention. The inventive resin composition has improved flex-elasticity in the range of 2,500 to 4,600 kgf/cm².

Amount of PBT resin used in the present invention is ranged from 15 to 35% by weight. If the amount is less than 15% by weight, it is expected that there will be no substantial improvement of mechanical properties, particularly, flex-elasticity to the extent desired. On the other hand, if the amount exceeds 35% by weight, the cover for air bag device of automobile has the same disadvantages as described above. That is, the cover feels very rigid to touch and a problem, of departing entire portion of the cover from the air bag device instead of deploying the air bag device along a break line for deploying when the air bag device is deployed, may occur.

Still further, in order to increase compatibility between the resin compositions according to the present invention and processing workability thereof in twin screw type of extrusion mixing machines, the present inventive resin composition is added with polyolefin copolymer resin having epoxy groups represented by the following formula 3: 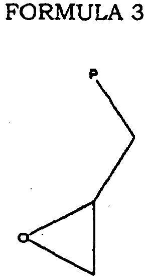 (wherein P is a polymer obtained from C₂ to C₁₂ olefins)

Preferably, P in the above formula 3 is any one selected from copolymer, terpolymer and more complex polymer of olefins having different numbers of carbon atoms.

The polyolefin copolymer resin having epoxy groups described above is preferably added in the amount of 1.0 to 5.0 parts by weight to 100 parts by weight of the polyetherester block copolymer.

When the amount of the polyolefin copolymer resin having epoxy groups is below 1.0 part by weight, it exhibits no compatibility effects between individual resin compositions to result in poor processing workability of the compositions. On the contrary, if the amount is above 5.0 parts by weight, the resin compositions have markedly reduced fusion viscosity and exhibit poor formability in production of final products.

The present invention preferably uses terpolymer represented by the following formula 4 as the polyolefin copolymer resin: 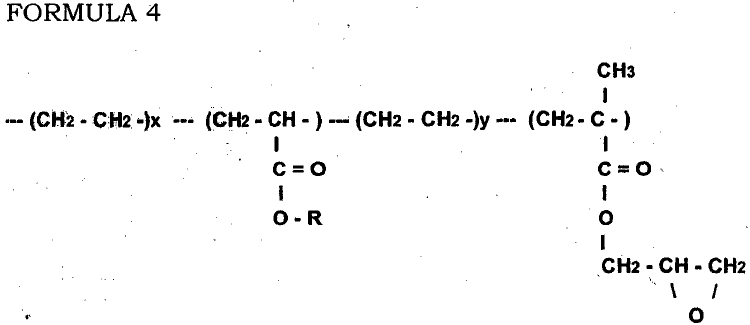 (wherein R has the same meaning as defined in the above illustrated formula 1; and each of x and y is a natural number not more than 100,000).

x and y in the above formula 4 are determined depending upon molar ratio of polymerized compositions, respectively.

In order to improve durability of the polyetherester thermoplastic elastomer resin according to the present invention, preferably are added one or more of stabilizer selected from a group consisting of: sodium-2,2'-methylene-bis-(4,6-di-tert-butylphenyl)phosphate, 2,2'-m-phenylene bis(2-oxazoline), 4,4'-bis(α,α-dimethylbenzyl diphenylamine) and N,N'-hexane-1,6-diyl bis[3-(3,5-di-tert-butyl-4-hydroxyphenyl propionamide)] alone or in combination.

2,2'-m-phenylene bis(2-oxazoline) is represented by the following formula 5 and 4,4'-bis(α,α-dimethylbenzyl diphenylamine) is represented by the following formula 6. Alternatively, N,N'-hexane-1,6-diyl bis-[3-(3,5-di-tert-butyl-4-hydroxyphenyl propionamide)] is represented by the following formula 7.

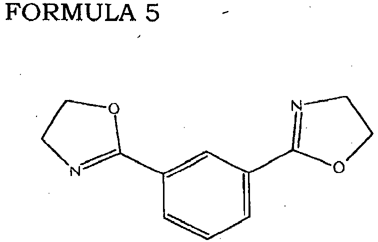

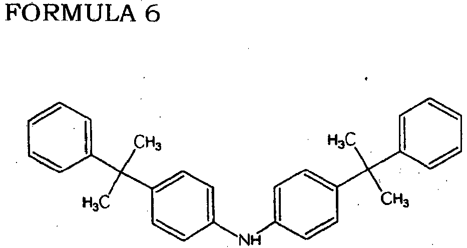

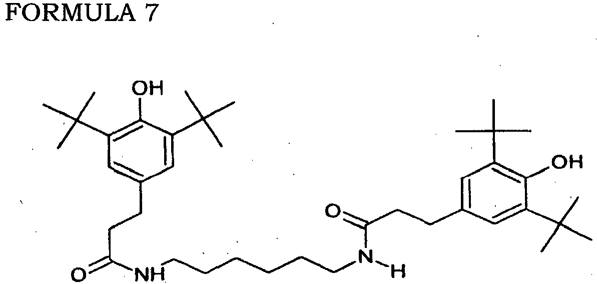

In case that a stabilizer system including the stabilizer described above which is represented by any one of formulae 5 to 7 is used, an amount of the stabilizer added is preferably in the range from 0.1 to 1.0 parts by weight to 100 parts by weight of the polyetherester block copolymer.

With regard to adding the stabilizer alone or in combination to the polyetherester elastomer resin composition of the present invention for improving durability, the stabilizer must be compatible with characteristics of the elastomer resin composition. Accordingly, it can derive synergistic effect of durability of the polyetherester thermoplastic elastomer resin composition by applying the stabilizer system in the mixing ratio described above, thereby ensuring deploying stability of the cover for air bag device of automobile used for a long period of time.

Especially, N,N'-hexane-1,6-diyl bis[3-(3,5-di-tert-butyl-4-hydroxyphenyl propionamide)] among the stabilizers functions to trap activated radicals generated by heat and has favorable heat-resistance and a merit of not substantially deteriorating original color of the elastomer resin composition.

In case of using 2,2'-m-phenylene bis(2-oxazoline) and 4,4'-bis(α,α-dimethylbenzyl diphenylamine) alone, respectively, each of them shows insufficient effects. However, if these stabilizers are used together in equal amounts, they exhibit synergistic effects in embodying excellent durability of the elastomer resin composition. In particular, 2,2'-m-phenylene bis(2-oxazoline) acts as a capturing agent of formic acid generated during decomposition of soft segments while having a role of decomposer for peroxides generated during ageing of the polyetherester block copolymer resin according to the present invention.

When the stabilizer system described above is added, the polyetherester elastomer resin composition of the present invention can result in durability of above 20 fold of a reference composition on the basis of tensile strength, as compared with general elastomer resin compositions containing no additional stabilizers. Such a numerical value means high level of durability which is much more superior than general polyetherester thermoplastic elastomers. More particularly, the inventive elastomer resin composition applied to the cover for air bag device of automobile can prevent debris of the cover from scattering in all directions while deploying the cover, even after the cover was used for long period of time and, in addition to, maintain stable deploying performance.

Consequently, in accordance with the present invention, it enables production of a polyetherester thermoplastic elastomer resin composition having desirable flexibility and flex-elasticity, excellent durability, formability and scratch-resistance and, particularly, superior splitting properties useful for the cover for air bag device of automobile.

### (ADVANTAGEOUS EFFECTS)

As described in detail above, the polyetherester thermoplastic elastomer resin composition of the present invention has excellent durability, processability and scratch-resistance, as well as satisfactory flexibility and mechanical properties, especially, flex-elasticity.

Features of the present invention described above and other advantages will be more clearly understood by the following non-limited examples and comparative examples, which are not intended to restrict the scope of the invention but are instead illustrative embodiments of the present invention. Accordingly, it will be obvious to those skilled in the art that the present invention is not restricted to the specific matters stated above and the examples below.

### BEST MODE FOR CARRYING OUT THE INVENTION

### EXAMPLE 1

To 100 parts by weight of a polyetherester elastomer resin composition comprising 34% by weight of polyetherester thermoplastic elastomer resin KOPEL KP 3355 having surface hardness of 55D shore hardness, 40% by weight of KOPEL KP 3340 having surface hardness of 40D shore hardness and 26% by weight of polybutylene terephthalate resin SPESIN KP210, all of which are available from KOLON Industries Inc., 4 parts by weight of polyethylene-methylacrylate-glycidylmethacrylate terpolymer ATOFINA AX8900 represented by the above formula 4 were added and mixed by using a tumbler mixer for 1 hour.

0.5 parts by weight of N,N'-hexane-1,6-diyl bis[3-(3,5-di-tert-butyl-4-hydroxyphenyl propionamide)] and 0.5 parts by weight of 2,2'-m-phenylene bis(2-oxazoline) were fused and added to 100 parts by weight of the prepared three-component polyetherester through a twin screw extruder to produce a resin composition.

The twin screw extruder was run under a condition that temperature of the twin screw extruder is variably set up to 150°C, 200°C, 220°C, 230°C and 250°C in order from a first inlet to a die and revolutions of the screw is set up to 230 rpm.

The resulting resin composition was discharged in the form of strands, cooled and changed into solid state in a cooling tank of 35°C, and passed through a pelletizer to yield a pellet type product.

### EXAMPLES 2 TO 5 AND COMPARATIVE EXAMPLES 1 TO 14

Pellet type products were obtained by preparing polyetherester thermoplastic elastomer resin compositions with compositions and contents listed in the following Table 1 in the same manner as in Example 1.

**TABLE 1**

| Types | | A | B | C | D | E | F | G | H |
|---|---|---|---|---|---|---|---|---|---|
| Examples | 1 | 40 | 34 | 0 | 0 | 26 | 0 | 0 | 0 |
| | 2 | 43 | 32 | 0 | 0 | 25 | 0 | 0 | 0 |
| | 3 | 55 | 15 | 0 | 0 | 30 | 0 | 0 | 0 |
| | 4 | 40 | 45 | 0 | 0 | 15 | 0 | 0 | 0 |
| | 5 | 45 | 31 | 0 | 0 | 24 | 0 | 0 | 0 |
| Comparative examples | 1 | 0 | 76 | 0 | 24 | 0 | 0 | 0 | 0 |
| | 2 | 0 | 70 | 0 | 30 | 0 | 0 | 0 | 0 |
| | 3 | 0 | 56 | 0 | 44 | 0 | 0 | 0 | 0 |
| | 4 | 65 | 0 | 0 | 35 | 0 | 0 | 0 | 0 |
| | 5 | 50 | 0 | 0 | 50 | 0 | 0 | 0 | 0 |
| | 6 | 52 | 48 | 0 | 0 | 0 | 0 | 0 | 0 |
| | 7 | 100 | 0 | 0 | 0 | 0 | 0 | 0 | 0 |
| | 8 | 70 | 0 | 0 | 0 | 32 | 0 | 0 | 0 |
| | 9 | 0 | 100 | 0 | 0 | 0 | 0 | 0 | 0 |
| | 10 | 0 | 0 | 100 | 0 | 0 | 0 | 0 | 0 |
| | 11 | 0 | 0 | 0 | 100 | 0 | 0 | 0 | 0 |
| | 12 | 0 | 0 | 0 | 0 | 0 | 100 | 0 | 0 |
| | 13 | 0 | 0 | 0 | 0 | 0 | 0 | 100 | 0 |
| | 14 | 0 | 0 | 0 | 0 | 0 | 0 | 0 | 100 |

In Table 1, A to H represent the following ingredients:
A: Kolon KOPEL KP3340 (polyetherester elastomer, shore hardness 40D)
B: Kolon KOPEL KP3355 (polyetherester elastomer, shore hardness 55D)
C: Kolon KOPEL KP3363 (polyetherester elastomer, shore hardness 63D)
D: Kolon KOPEL KP3372 (polyetherester elastomer, shore hardness 72D)
E: Kolon SPESIN KP210 (polybutylene terephthalate, shore hardness 78D)
F: Dupont DYM-100 (polyetherester elastomer, shore hardness 45D)
G: Dupont DYM-350 (polyetherester elastomer, shore hardness 55D)
H: Ticona Vandar 9116 (polyetherester elastomer, shore hardness 57D)

### Evaluation of physical properties

After drying moisture of each of the resin compositions yielded from Examples 1 to 5 and Comparative examples 1 to 14 by a hot air dehumidifying dryer at 100°C for 5 hours to remove moisture from the composition, specimen for measuring physical properties and a cover for air bag device of automobile were formed by using an injection type of molding machine. The obtained specimen and cover were evaluated as follows and the results are shown in the following Table 2.

Methods for determining physical properties of the composition are particularly described as follows:
(1) Hardness: measured according to ASTM D2240, unit of shore D.
(2) Tensile strength: measured according to ASTM D638, unit of kg/cm².
(3) Flex-elasticity: measured according to ASTM D790, unit of kg/cm².
(4) Elongation: measured according to ASTM D638, unit of %.
(5) Processability: In production of thermoplastic elastomer composition using the twin screw mixer and a general strand cutter, the formability was evaluated by visually observing whether the fused resin composition can stably form resin strands. The resin strands stably formed without problems are evaluated to O, while X for those unstably discharged or cut off during processing.
(6) Evaluation of horn workability: Each of modules was formed by using the injection molded cover with other parts such as air bag, and an expansion agent. The formed modules were built in retaining devices made of iron, and entered in constant thermal water baths at-40°C, 23°C and 85°C, respectively. Each of the modules was kept in the bath for 1 hour after reaching to a constant temperature and it was evaluated whether a horn of the module normally operates when the horn was actuated at the constant temperature.
(7) Evaluation of spreading property of a cover for air bag: Each of modules was formed by using the injection molded cover with other parts such as air bag, and an expansion agent. The formed modules were built in retaining devices made of iron, and entered in constant thermal water baths at -40°C, 23°C and 85°C, respectively. Each of the modules was kept in the bath for 1 hour after reaching to a constant temperature. Thereafter, a trestle was built in the bath after taking out the module, electric current was applied to the bath to ignite ignition material contained in the gas generator and to spread out the air bag. Evaluation of the spreading property was conducted as follows:
O: the cover with excellent deploying property evaluated when spreading cracks of the cover are occurred along tear seam parts and broken pieces are not scattered in all directions during spreading; and
X: the cover with poor deploying property except for the above case.

**TABLE 2**

| Types | | Flexelasticity (kgf/c m²) | Flexstrength (kgf/cm²) | Tensile strength (kgf/cm²) | Elongation (%) | Hardness (shore D) | Formability | Horn workability | | | Spreading property | | |
|---|---|---|---|---|---|---|---|---|---|---|---|---|---|
| | | | | | | | | -40 °C | 23 °C | 85 °C | -40 °C | 23 °C | 85° C |
| Examples | 1 | 3958 | 291 | 254 | 346 | 55 | ○ | ○ | ○ | ○ | ○ | ○ | ○ |
| | 2 | 3700 | 278 | 244 | 345 | 55 | ○ | ○ | ○ | ○ | ○ | ○ | ○ |
| | 3 | 3032 | 235 | 265 | 480 | 56 | ○ | ○ | ○ | ○ | ○ | ○ | ○ |
| | 4 | 2720 | 246 | 220 | 410 | 54 | ○ | ○ | ○ | ○ | ○ | ○ | ○ |
| | 5 | 2995 | 267 | 213 | 336 | 55 | ○ | ○ | ○ | ○ | ○ | ○ | ○ |
| Comparative examples | 1 | 2757 | 262.9 | 258 | 370 | 58 | ○ | ○ | ○ | ○ | X | ○ | ○ |
| | 2 | 3505 | 301 | 275 | 367 | 59 | ○ | ○ | ○ | ○ | X | ○ | ○ |
| | 3 | 4017 | 339 | 289 | 370 | 60 | ○ | ○ | ○ | ○ | X | X | ○ |
| | 4 | 4123 | 329 | 280 | 364 | 60 | ○ | ○ | ○ | ○ | X | X | ○ |
| | 5 | 4070 | 307 | 260 | 388 | 58 | ○ | ○ | ○ | ○ | X | ○ | ○ |
| | 6 | 1242 | 147 | 223.5 | 633.4 | 47 | ○ | ○ | X | X | ○ | ○ | ○ |
| | 7 | 850 | 110 | 182 | 580 | 40 | ○ | ○ | X | X | ○ | ○ | ○ |
| | 8 | 4500 | 293 | 222 | 301 | 58 | ○ | ○ | ○ | ○ | X | ○ | ○ |
| | 9 | 2112 | 214 | 248 | 489 | 55 | ○ | ○ | X | X | ○ | ○ | ○ |
| | 10 | 4230 | 370 | 306 | 520 | 63 | ○ | ○ | ○ | ○ | X | X | ○ |
| | 11 | 6300 | 420 | 420 | 332 | 72 | ○ | ○ | X | X | X | X | X |
| | 12 | 1060 | 135 | 220 | 520 | 45 | ○ | ○ | X | X | ○ | ○ | ○ |
| | 13 | 4391 | 293 | 253 | 346 | 55 | ○ | ○ | ○ | ○ | ○ | ○ | ○ |
| | 14 | 2995 | 202 | 173 | 238 | 57 | ○ | ○ | ○ | ○ | ○ | ○ | ○ |

### INDUSTRIAL APPLICABILITY

As described above, the polyetherester thermoplastic elastomer resin composition of the present invention has excellent flex-elasticity, processability and scratch-resistance and, therefore, is useful for manufacturing a cover for air bag of automobile.

## Claims

1. A polyetherester thermoplastic elastomer resin composition having flex-elasticity in the range of 2,500 to 4,600 kgf/cm² (measured according to ASTM D790), and comprising 10 to 70% by weight of low hardness polyetherester block copolymer having shore-hardness in the range of 40 to 45D (measured according to ASTM D2240), 15 to 55% by weight of high hardness polyetherester block copolymer having shore-hardness in the range of 50 to 80D (measured according to ASTM D2240), and 15 to 35% by weight of polybutylene terephthalate, and wherein the said resin composition is further added with polyolefin copolymer resin having epoxy groups represented by the following formula 3: 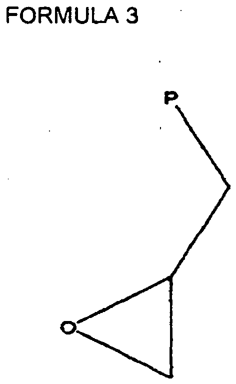 (wherein P is a polymer obtained from C₂ to C₁₂ olefins)

2. The polyetherester thermoplastic elastomer resin composition according to claim 1, wherein the polyolefin copolymer resin having epoxy groups is added in the amount of 1.0 to 5.0 parts by weight to 100 parts by weight of the polyetherester block copolymer.

3. The polyetherester thermoplastic elastomer resin composition according to claim 1 or 2 wherein the polyolefin copolymer resin having epoxy groups is polyethylene-methylacrylate-glycidylmethacrylate represented by the following formula 4: 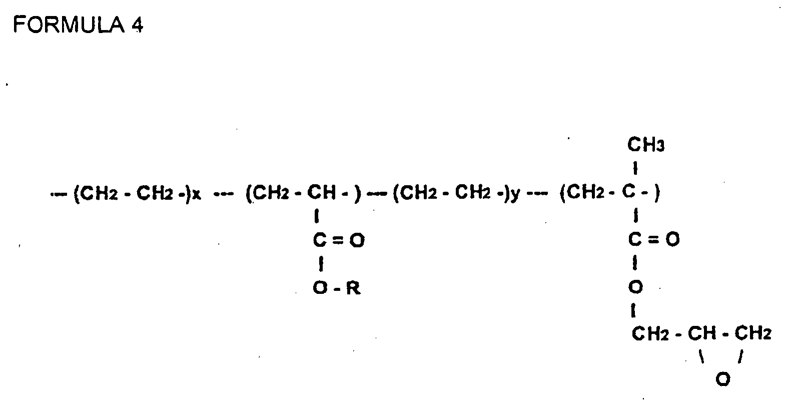 (wherein R is a radical obtained after removing two carboxyl groups from any compound selected from a group consisting of aromatic, aliphatic and cyclic dicarboxylic acids having molecular weight of 500 or less; and each of x and y is a natural number not more than 100,000).

4. The polyetherester thermoplastic elastomer resin composition according to claim 1, further comprising one or more of stabilizer selected from a group consisting of: sodium-2,2'-methylene-bis-(4,6-di-tert-butylphenyl)phosphate, 2,2'-m-phenylene bis(2-oxazoline), 4,4'-bis([alpha],[alpha]-dimethylbenzyl diphenylamine) and N,N'-hexane-1,6-diyl bis-[3(3,5-di-tert-butyl-4-hydroxyphenyl propionamide)] alone or in combination.

5. The polyetherester thermoplastic elastomer resin composition according to claim 4, wherein the stabilizer is added in the amount of 0.1 to 1.0 parts by weight to 100 parts by weight of the polyetherester block copolymer.

6. A cover for air bag of automobile manufactured by molding processes using the thermoplastic polyetherester elastomer resin composition as defined in any of claims 1 to 5.

## Patentansprüche

1. Thermoplastische Polyetherester-Elastomer-Harzzusammensetzung mit einer Flexelastizität im Bereich von 2500 bis 4600 kgf/cm² (gemessen gemäß ASTM D790), und umfassend 10 bis 70 Gew.% eines Polyetherester-Blockcopolymers niedriger Härte mit einer Shore-Härte im Bereich von 40 bis 45 D (gemessen gemäß ASTM D2240), 15 bis 55 Gew.% eines Polyetherester-Blockcopolymers hoher Härte mit einer Shore-Härte im Bereich von 50 bis 80 D (gemessen gemäß ASTM D2240), und 15 bis 35 Gew.% Polybutylenterephthalat, und worin zu der Harzzusammensetzung weiterhin Polyolefin-Copolymerharz mit Epoxygruppen, dargestellt durch die folgende Formel 3: 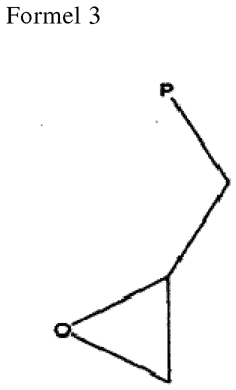 (worin P ein Polymer, erhältlich aus C₂ bis C₁₂ Olefinen, darstellt), zugegeben ist.

2. Thermoplastische Polyetherester-Elastomer-Harzzusammensetzung nach Anspruch 1, worin der Polyolefin-Copolymerharz mit Epoxygruppen in einer Menge von 1,0 bis 5,0 Gewichtsteilen bezogen auf 100 Gewichtsteile des Polyetherester-Blockcopolymers zugegeben ist.

3. Thermoplastische Polyetherester-Elastomer-Harzzusammensetzung nach Anspruch 1 oder 2, worin der Polyolefin-Copolymerharz mit Epoxygruppen Polyethylen-Methylacrylat-Glycidylmethacrylat ist, dargestellt durch die folgende Formel 4: 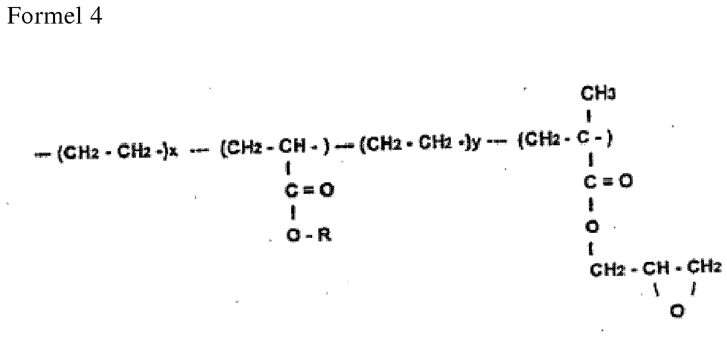 (worin R ein Rest ist, erhältlich nach der Entfernung von zwei Carboxylgruppen aus irgendeiner Verbindung, ausgewählt aus der Gruppe bestehend aus aromatischen, aliphatischen und zyklischen Dicarbonsäuren mit Molekulargewichten von 500 oder weniger; und wobei x und y jeweils eine ganze Zahl von nicht mehr als 100000 sind).

4. Thermoplastische Polyetherester-Elastomer-Harzzusammensetzung nach Anspruch 1, weiterhin umfassend einen oder mehrere Stabilisatoren, ausgewählt aus der Gruppe, bestehend aus: Natrium-2,2'-methylen-bis-(4,6-di-tert-butylphenyl)phosphat, 2,2'-m-Phenylen-bis-(2-oxazolin), 4,4'-Bis-([alpha], [alpha]-dimethylbenzyldiphenylamin) und N,N'-Hexan-1,6-diyl-bis-[3(3,5-di-tert-butyl-4-hydroxyphenylpropionamid)] allein oder in Kombination.

5. Thermoplastische Polyetherester-Elastomer-Harzzusammensetzung nach Anspruch 4, worin der Stabilisator in der Menge von 0,1 bis 1,0 Gewichtsteilen bezogen auf 100 Gewichtsteile des Polyetherester-Blockcopolymers zugegeben ist.

6. Abdeckung für den Airbag eines Automobils, hergestellt durch Formgebungsverfahren unter Verwendung der thermoplastischen Polyetherester-Elastomer-Harzzusammensetzung, wie sie in irgendeinem der Ansprüche 1 bis 5 definiert ist.

## Revendications

1. Une composition de résine élastomère thermoplastique de polyétherester ayant une élasticité flex de l'ordre de 2.500 à 4,600 kgf/cm² (mesurée conformément à ASTM D790), et comprenant 10 à 70 % en poids de copolymère en bloc de polyétherester de faible dureté ayant une dureté shore de l'ordre de 40 à 45D (mesurée selon ASTM D2240), 15 à 55 % en poids d'un copolymère en bloc de polyétherester de haute dureté ayant une dureté shore de l'ordre de 50 à 80D (mesurée ASTM D2240), et 15 à 35 % en poids de téréphtalate de polybutylène, et dans lequel la dite composition de résine est en plus supplémentée avec une résine de copolymère de polyoléfine ayant des groupes époxy représentés par la formule 3 suivante: 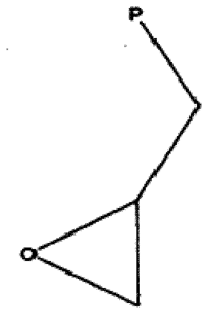 (dans laquelle P est un polymère obtenu d'oléfines en C₂ à C₁₂).

2. La composition de résine élastomère thermoplastique de polyétherester selon la revendication 1, dans laquelle la résine de copolymère de polyoléfine ayant des groupes époxy est ajoutée en une quantité de 1,0 à 5,0 parties en poids pour 100 parties en poids du copolymère en bloc de polyétherester.

3. La composition de résine élastomère thermoplastique de polyétherester selon la revendication 1 ou 2, dans laquelle la résine de copolymère de polyoléfine ayant des groupes époxy est le polyéthylène-méthylacrylate-glycidylméthacrylate représente par la formule 4 suivante: 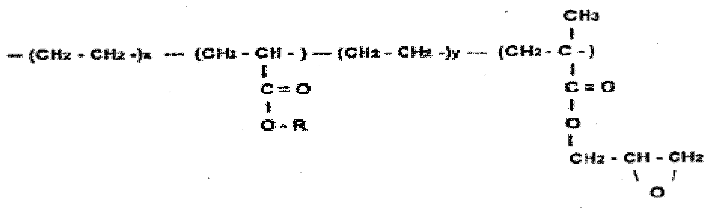 (dans laquelle R est un radical obtenu après l'enlèvement de deux groupes de carboxyl d'un composé quelconque choisi parmi le groupe constitué par les acides dicarboxyliques cycliques, aliphatiques et aromatiques ayant un poids moléculaire de 500 ou moins; et chacun de x et y est un nombre entier non supérieur à 100.000)

4. La composition de résine élastomère thermoplastique de polyétherester selon la revendication 1, en plus comprenant un ou plusieurs stabilisants choisis parmi le groupe constitué par: le sodium-2,2'-méthylène-bis-(4,6-di-tert-butylphényl)phosphate, la 2,2'-m-phénylène-bis(2-oxazoline), la 4,4'-bis([alpha],[alpha]-diméthylbenzyldiphénylamine) et la N,N'-hexane-1,6-diylbis-[3(3,5-di-tert-butyl-4-hydroxyphénylpropionamide)] seul ou en combinaison.

5. La composition de résine élastomère thermoplastique de polyétherester selon la revendication 4, dans laquelle le stabilisant est ajouté en la quantité de 0,1 à 1,0 parties en poids pour 100 parties en poids du copolymère en bloc de polyétherester.

6. Un recouvrement pour sac gonflable d'automobile préparé par des procédés de moulage utilisant la composition de résine élastomère de polyétherester thermoplastique telle que définie dans l'une quelconque des revendications 1 à 5.
